(19) Europäisches Patentamt / European Patent Office / Office européen des brevets

(11) **EP 2 712 292 B1**

(12) **EUROPEAN PATENT SPECIFICATION**

(45) Date of publication and mention
of the grant of the patent:
**25.04.2018 Bulletin 2018/17**

(51) Int Cl.:
*A01N 59/16* (2006.01)        *A01N 41/10* (2006.01)
*A01P 1/00* (2006.01)

(21) Application number: **12735997.4**

(22) Date of filing: **29.06.2012**

(86) International application number:
**PCT/US2012/044785**

(87) International publication number:
**WO 2013/006396 (10.01.2013 Gazette 2013/02)**

(54) **MICROBICIDE COMBINATIONS CONTAINING SILVER**

SILBERHALTIGE MIKROBIOZIDKOMBINATIONEN

COMBINAISONS MICROBICIDES CONTENANT DE L'ARGENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2011 US 201161503637 P**

(43) Date of publication of application:
**02.04.2014 Bulletin 2014/14**

(73) Proprietor: **Rohm and Haas Company
Philadelphia, PA 19106 (US)**

(72) Inventors:
• **GHOSH, Tirthankar
Oreland, PA 19075 (US)**
• **PAREEK, Kiran
Bensalem, PA 19020 (US)**

(74) Representative: **Houghton, Mark Phillip et al
Patent Outsourcing Limited
1 King Street
Bakewell, Derbyshire DE45 1DZ (GB)**

(56) References cited:
EP-A1- 1 941 797        US-A1- 2003 005 508
US-A1- 2010 189 811

**Description**

The present invention relates to microbicide combinations containing silver and diiodomethyl-p-tolylsulfone (DIMTS).

A combination of DIMTS with zinc is disclosed in U.S. App. No. 2006/0171911. However, this reference does not teach the combination claimed in the present application.

Use of combinations of at least two antimicrobial compounds can broaden potential markets, reduce use concentrations and costs, and reduce waste. In some cases, commercial antimicrobial compounds cannot provide effective control of microorganisms, even at high use concentrations, due to weak activity against certain types of microorganisms, e.g., those resistant to some antimicrobial compounds. Combinations of different antimicrobial compounds are sometimes used to provide overall control of microorganisms in a particular end use environment. The problem addressed by this invention is to provide additional synergistic combinations of antimicrobial compounds.

Statement of the Invention

The present invention is as set out in the accompanying claims.

The present invention is directed to a synergistic microbicidal composition. The composition comprises: (a) silver ion; and (b) diiodomethyl-p-tolylsulfone; wherein a weight ratio of silver to diiodomethyl-p-tolylsulfone is from 1/0.008 to 1/0.1, 1/0.13 to 1/8 or 1/120 to 1/280 and wherein silver ion (a) is present as the complex defined in claim 1.

Detailed Description of the Invention

The silver ion (Ag(I)) is present in the composition as a complex with a copolymer comprising polymerized units of a monomer X and a monomer Y; wherein monomer X is N-vinylimidazole; and wherein monomer Y is an ethylenically unsaturated compound selected from carboxylic acids, carboxylic acid salts, carboxylic acid esters (preferably alkyl esters, hydroxyalkyl esters, polyethylene glycol esters, etc.), organosulfuric acids, organosulfuric acid salts, sulfonic acids, sulfonic acid salts, phosphonic acids, phosphonic acid salts, vinyl esters (e.g., vinyl $C_1$-$C_8$ alkanoates), (meth)acrylamides, $C_8$-$C_{20}$ aromatic monomers containing at least one exocyclic ethylenic unsaturation and combinations thereof, provided that monomer Y comprises at least one alkyl (meth)acrylate.

The term "copolymer" as used herein refers to polymers polymerized from at least two different monomers. Percentages herein are by weight, unless specified otherwise. Monomer unit percentages are based on total copolymer weight.

The term "aqueous" as used herein means water and mixtures composed substantially of water and water miscible solvents.

The use of the term "(meth)" followed by another term such as acrylic, acrylate, acrylamide, etc., as used herein and in the appended claims, refers to, for example, both acrylic and methacrylic; acrylate and methacrylate; acrylamide and methacrylamide; etc.

The glass transition temperature ("Tg") for the copolymers and pressure sensitive adhesive formulations of the present invention may be measured by differential scanning calorimetry (DSC) taking the mid-point in the heat flow versus temperature transition as the Tg value.

The copolymer comprises at least 35 wt% of monomer X derived units. Preferably, the copolymer comprises at least 40 wt% of monomer X derived units. The copolymer comprises no more than 55 wt% of monomer X derived units, preferably no more than 50 wt%.

Monomer X is N-vinylimidazole (VI).

Preferably, monomer Y is selected from carboxylic acids, carboxylic acid salts, carboxylic acid esters, organosulfuric acids, organosulfuric acid salts, sulfonic acids, sulfonic acid salts, phosphonic acids, phosphonic acid salts, vinyl esters, (meth)acrylamides, $C_8$-$C_{20}$ aromatic monomers containing at least one exocyclic ethylenic unsaturation and combinations thereof. Preferably, monomer Y is selected from carboxylic acids, carboxylic acid esters (e.g., alkyl (meth)acrylates), (meth)acrylamides, $C_8$-$C_{20}$ aromatic monomers containing at least one exocyclic ethylenic unsaturation and combinations thereof. Preferably, monomer Y is selected from acrylic acid (AA), methacrylic acid, itaconic acid, maleic acid, fumaric acid, methyl (meth)acrylate, ethyl (meth)acrylate, propyl (meth)acrylate, isopropyl acrylate, n-butyl (meth)acrylate, isobutyl (meth)acrylate, 2-ethylhexyl (meth)acrylate, decyl (meth)acrylate, lauryl (meth)acrylate, stearyl (meth)acrylate, styrene, vinyltoluene, $\alpha$-methylstyrene and combinations thereof. Preferably, monomer Y comprises at least one $C_2$-$C_8$ alkyl (meth)acrylate, alternatively n-butyl (meth)acrylate, alternatively monomer Y comprises n-butyl acrylate (BA) and acrylic acid.

Preferably, the copolymer comprises no more than 5 wt% of units derived from ethylenically unsaturated monomer containing an epoxide function, preferably no more than 1 wt%, preferably no more than 0.5 wt%, preferably no more than 0.1 wt%, preferably no more than 0.05 wt%.

Preferably, the composition comprising a copolymer has a pH from 3.5 to 10, preferably from 4 to 10, preferably from 4 to 10, preferably from 4.5 to 10, preferably from 4 to 9, preferably from 4 to 8, preferably from 4.5 to 7.5, preferably from 5 to 10, preferably from 6 to 10, preferably from 7 to 10, preferably from 8 to 10.

Preferably, the composition comprising a copolymer comprises at least 20 wt% solids. Preferably, the composition comprises at least 25 wt% solids. Preferably, the composition comprises at least 30 wt% solids.

If the copolymer comprises polymerized units derived from a crosslinker, preferably the crosslinkers are multi-ethylenically unsaturated monomers, preferably, selected from 1,4-butanediol diacrylate; 1,4-butanediol dimethacrylate; 1,6-hexanediol diacrylate; 1,1,1-trimethylol propane triacrylate; 1,1,1-trimethylol propane trimethacrylate; allyl methacrylate; divinylbenzene; and N-allyl acrylamide. Preferably, the crosslinker derived units are derived from crosslinker selected from 1,1,1-trimethylol propane trimethacrylate. If crosslinkers are present, preferably the copolymer comprises 0.01 to 10 wt% (based on solids) crosslinker, preferably 0.01 to 5 wt% , preferably 0.01 to 1 wt%.

The copolymer comprises from 6.5 wt% to 8.5 wt% silver based on total weight of copolymer and silver. Silver is in the form of Ag(I) ion, which typically is introduced in the form of silver nitrate. Methods for preparation of the copolymer have been disclosed previously, e.g., in U.S. Pat.. No. 7,335,613.

The specific amount of the composition of this invention necessary to inhibit or control the growth of microorganisms in an application will vary. Typically, the amount of the composition of the present invention is sufficient to control the growth of microorganisms if it provides from 0.1 to 25,000 ppm (parts per million) active ingredient of the composition (as silver plus co-biocide combined). It is preferred that the active ingredients of the composition be present in the locus in an amount of at least 0.1 ppm, more preferably at least 5 ppm, more preferably at least 50 ppm and most preferably at least 500 ppm. In one embodiment of the invention, the active ingredients are present in an amount of at least 2,000 ppm. It is preferred that the active ingredients of the composition be present in the locus in an amount of no more than 20,000 ppm, more preferably no more than 15,000 ppm, more preferably no more than 5,000ppm. Preferably, the active ingredients are present in an amount of no more than 15,000 ppm, more preferably no more than 8,000 ppm, and most preferably no more than 3,000 ppm.

## Examples

The silver-containing copolymer tested in these Examples comprises a polymer having 45% BA monomer units, 45% VI monomer units and 10% AA monomer units, based on polymer weight, and containing 7.8% silver ion, based on total weight of polymer and silver. The silver-containing polymer was formulated in water at 39% solids and pH 11.

The combinations were evaluated for synergy by determining the synergy index (S.I.) of the combination. The Synergy index calculated is based on minimum inhibitory concentrations (MIC) of two biocides (A and B) alone and in combinations. The lower the S.I. value, the better the synergy.

High Resolution Minimum Inhibitory Concentration (HRMIC) method was performed to determine the potential for synergy of the combinations. The tests organisms were gram negative bacteria (*Pseudomonas aeruginosa*), Gram positive bacteria (*Staphylococcus aureus*), yeast (*Candida albicans*) and mold (*Aspergillus niger*). Contact time for the bacteria was 24 and 48 hours, yeast was 48 and 72 hrs, 3 and 7 days for mold. The test was carried out in 96well microtiter plates.

The test results for demonstration of synergy of the MIC combinations are shown below in Tables 1 through 4. Each table shows the combinations of two components results against the microorganisms tested with incubation times; the end-point activity in ppm measured by the MIC for compound A alone (CA), for component B alone (CB), and the mixture (Ca) and (Cb); the calculated SI value; and the range of synergistic ratios for each combination tested.

$$Ca/CA + Cb/CB = \text{Synergy Index (\"SI\")}$$

Wherein:

CA = concentration of compound A in ppm, acting alone, which produced an end point (MIC of Compound A).
Ca = concentration of compound A in ppm, in the mixture, which produced an end point.
CB = concentration of compound B in ppm, acting alone, which produced an end point (MIC of Compound B).
Cb = concentration of compound B in ppm, in the mixture, which produced an end point.

When the sum of Ca/CA and Cb/CB is greater than one, antagonism is indicated. When the sum is equal to one, additivity is indicated, and when less than one, synergism is demonstrated.

**Preservatives Used**

| Abbreviations | Active ingredient | Supplier | AI% | Solvent |
|---|---|---|---|---|
| silver-containing copolymer | Silver | The Dow Chemical Co. | 3 | MQ $H_2O$ |
| AMICAL™ 48 biocide | Diiodomethyl-p-tolysulfone (DIMTS) | The Dow Chemical Co. | 95 | Ethanol |

**Inoculums Used**

| Inoculum Size of organisms (CFU/ml) | | | |
|---|---|---|---|
| *Staphylococcus. aureus* ATCC# 6538 | *Pseudomonas aeruginosa* ATCC # 15442 | *Aspergillus niger* ATCC# 16404 | *Candida albicans* A TCC#10203 |
| $1.2 \times 10^7$ | $1.2 \times 10^7$ | $1.2 \times 10^5$ | $5.3 \times 10^5$ |

**Media Used**

| Media Used for testing | | | |
|---|---|---|---|
| *Staphylococcus aureus* ATCC# 6538 | *Pseudomonas aeruginosa* ATCC # 15442 | *Aspergillus niger* ATCC# 16404 | *Candida albicans* ATCC#10203 |
| TSB | TSB | PDB | PDB |

**Table 1**

| Ca:component in ppm AI (silver ion) of Silver-containing copolymer **Cb:** component in ppm AI of DIMTS | | | | | |
|---|---|---|---|---|---|
| Test Organisms | Contact Time | Ca | Cb | S.I. | Ca:Cb |
| A.niger | 3rd day | 5 | - | - | - |
| ATCC #16404 | | - | 0.3 | - | - |
| | | 2.5 | 0.02 | 0.57 | 1:0.0080 |
| | | 2.5 | 0.1 | 0.83 | 1:0.0400 |
| | | 2.5 | 0.2 | 1.17 | 1:0.0800 |
| | | 1.25 | 0.06 | 0.45 | 1:0.0480 |
| | | 1.25 | 0.1 | 0.58 | 1:0.0800 |
| | | 1.25 | 0.2 | 0.92 | 1:0.1600 |
| | | 0.65 | 0.3 | 1.13 | 1:0.4615 |
| | | 0.35 | 0.3 | 1.07 | 1:0.8571 |
| | | 0.17 | 0.3 | 1.03 | 1:1.7647 |
| | 7th day | 5 | - | - | - |
| | | - | 0.5 | - | - |
| | | 2.5 | 0.03 | 0.56 | 1:0.0120 |
| | | 2.5 | 0.2 | 0.9 | 1:0.0800 |
| | | 2.5 | 0.3 | 1.1 | 1:0.1200 |
| | | 1.25 | 0.4 | 1.05 | 1:0.3200 |
| | | 0.65 | 0.4 | 0.93 | 1:0.6154 |
| | | 0.65 | 0.5 | 1.13 | 1:0.7692 |

(continued)

| Ca:component in ppm AI (silver ion) of Silver-containing copolymer<br>Cb: component in ppm AI of DIMTS | | | | | |
|---|---|---|---|---|---|
| Test Organisms | Contact Time | Ca | Cb | S.I. | Ca:Cb |
| | | 0.35 | 0.5 | 1.07 | 1:1.4286 |
| | | 0.17 | 0.5 | 1.03 | 1:2.9412 |
| Note: MIC alone (CA and CB) is on the upper rows. | | | | | |

Table2

| Ca:component in ppm AI of Silver-containing copolymer<br>Cb:component in ppm AI of DIMTS | | | | | |
|---|---|---|---|---|---|
| Test Organisms | Contact Time | Ca | Cb | S.I. | Ca:Cb |
| C.albicans | 48hrs | 20 | - | - | - |
| ATCC #10203 | | - | 20 | - | - |
| | | 10 | 0.08 | 0.50 | 1:0.0080 |
| | | 10 | 0.8 | 0.54 | 1:0.0800 |
| | | 10 | 10 | 1.00 | 1:1.0000 |
| | | 5 | 0.5 | 0.28 | 1:0.1000 |
| | | 5 | 5 | 0.50 | 1:1.0000 |
| | | 5 | 10 | 0.75 | 1:2.0000 |
| | | 5 | 20 | 1.25 | 1:4.0000 |
| | | 2.5 | 20 | 1.13 | 1:8.0000 |
| | | 1.25 | 20 | 1.06 | 1:16.0000 |
| | | 0.65 | 20 | 1.03 | 1:30.7692 |
| | | 0.35 | 20 | 1.02 | 1:57.1429 |
| | | 0.17 | 20 | 1.01 | 1:117.6471 |
| | 72hrs | 20 | - | - | - |
| | | - | 30 | - | - |
| | | 10 | 0.08 | 0.50 | 1:0.0080 |
| | | 10 | 8 | 0.77 | 1:0.8000 |
| | | 10 | 10 | 0.83 | 1:1.0000 |
| | | 10 | 20 | 1.17 | 1:2.0000 |
| | | 5 | 0.4 | 0.26 | 1:0.0800 |
| | | 5 | 4 | 0.38 | 1:0.8000 |
| | | 5 | 10 | 0.58 | 1:2.0000 |
| | | 5 | 20 | 0.92 | 1:4.0000 |
| | | 5 | 30 | 1.25 | 1:6.0000 |
| | | 2.5 | 20 | 0.79 | 1:8.0000 |
| | | 1.25 | 30 | 1.06 | 1:24.0000 |
| | | 0.65 | 30 | 1.03 | 1:46.1538 |

(continued)

| Ca:component in ppm AI of Silver-containing copolymer<br>Cb:component in ppm AI of DIMTS | | | | | |
|---|---|---|---|---|---|
| Test Organisms | Contact Time | Ca | Cb | S.I. | Ca:Cb |
| | | 0.35 | 30 | 1.02 | 1:85.7143 |
| | | 0.17 | 30 | 1.01 | 1:176.4706 |
| Note: MIC alone (CA and CB) is on the upper rows. | | | | | |

**Table3**

| Ca:component in ppm AI of Silver-containing copolymer<br>Cb:component in ppm AI of DIMTS | | | | | |
|---|---|---|---|---|---|
| Test Organisms | Contact Time | Ca | Cb | S.I. | Ca:Cb |
| Ps.aeruginosa | 24hrs | 10 | - | - | - |
| ATCC #15442 | | - | >1000 | - | - |
| | | 5 | 6 | 0.51 | 1:1.2000 |
| | | 5 | 60 | 0.56 | 1:12.0000 |
| | | 5 | 400 | 0.90 | 1:80.0000 |
| | | 5 | 500 | 1.00 | 1:100.0000 |
| | | 2.5 | 200 | 0.45 | 1:80.0000 |
| | | 2.5 | 300 | 0.55 | 1:120.0000 |
| | | 2.5 | 400 | 0.65 | 1:160.0000 |
| | | 2.5 | 500 | 0.75 | 1:200.0000 |
| | | 2.5 | 700 | 0.95 | 1:280.0000 |
| | | 2.5 | 800 | 1.05 | 1:320.0000 |
| | | 1.25 | 1000 | 1.13 | 1:800.0000 |
| Note: MIC alone (CA and CB) is on the upper rows. | | | | | |

**Table4**

| Ca:component in ppm AI of Silver-containing copolymer<br>Cb:component in ppm AI of DIMTS | | | | | |
|---|---|---|---|---|---|
| Test Organisms | Contact Time | Ca | Cb | S.I. | Ca:Cb |
| S.aureus | 24hrs | 10 | - | - | - |
| ATCC #6538 | | - | 30 | - | - |
| | | 5 | 10 | 0.83 | 1:2.0000 |
| | | 5 | 20 | 1.17 | 1:4.0000 |
| | | 2.5 | 20 | 0.92 | 1:8.0000 |
| | | 2.5 | 30 | 1.25 | 1:12.0000 |
| | | 1.25 | 30 | 1.13 | 1:24.0000 |
| | 48hrs | 40 | - | - | - |
| | | - | 400 | - | - |

(continued)

| Ca: component in ppm AI of Silver-containing copolymer Cb: component in ppm AI of DIMTS | | | | | |
|---|---|---|---|---|---|
| Test Organisms | Contact Time | Ca | Cb | S.I. | Ca:Cb |
| | | 30 | 4 | 0.76 | 1:0.1333 |
| | | 30 | 10 | 0.78 | 1:0.3333 |
| | | 30 | 40 | 0.85 | 1:1.3333 |
| | | 30 | 100 | 1.00 | 1:3.3333 |
| | | 30 | 200 | 1.25 | 1:6.6667 |
| | | 20 | 40 | 0.60 | 1:2.0000 |
| | | 20 | 60 | 0.65 | 1:3.0000 |
| | | 20 | 100 | 0.75 | 1:5.0000 |
| | | 20 | 200 | 1.00 | 1:10.0000 |
| | | 10 | 100 | 0.50 | 1:10.0000 |
| | | 10 | 300 | 1.00 | 1:30.0000 |
| Note: MIC alone (CA and CB) is on the upper rows. | | | | | |

The data demonstrate that there is an unexpected synergistic interaction between silver and DIMTS at ratios of 1/0.008 to 1/0.1 (C. albicans, 48 hr.), 1/0.13 to 1/8 (S. aureus, 48hr., 1/0.13-1/5 & C. albicans, 72 hr., 1/1-1/8) and 1/120 to 1/280 (Ps. aeruginosa).

## Claims

1. A synergistic microbicidal composition; said composition comprises: (a) silver ion that is present as a complex with a copolymer, said copolymer comprising 35 to 55 wt% of units derived from N-vinylimidazole and 45 to 65wt% of units derived from monomer Y; and (b) diiodomethyl-p-tolylsulfone;
   wherein a weight ratio of silver to diiodomethyl-p-tolylsulfone is from 1/0.008 to 1/0.1, 1/0.13 to 1/8 or 1/120 to 1/280;
   wherein said complex comprises 6.5wt% to 8.5wt% silver, based on the total weight of copolymer and silver;
   and wherein monomer Y is an ethylenically unsaturated compound selected from carboxylic acids, carboxylic acid salts, carboxylic acid esters, organosulfuric acids, organosulfuric acid salts, sulfonic acids, sulfonic acid salts, phosphonic acids, phosphonic acid salts, vinyl esters, (meth)acrylamides, $C_8$-$C_{20}$ aromatic monomers containing at least one exocyclic ethylenic unsaturation and combinations thereof, provided that monomer Y comprises at least one alkyl (meth)acrylate.

2. The composition of claim 1, wherein monomer Y is selected from carboxylic acids, carboxylic acid esters, (meth)acrylamides, $C_8$-$C_{20}$ aromatic monomers containing at least one exocyclic ethylenic unsaturation and combinations thereof, provided that monomer Y comprises at least one alkyl (meth)acrylate.

3. The composition according to any of the preceding claims, wherein monomer Y comprises at least one $C_2$-$C_8$ alkyl (meth)acrylate.

4. The composition according to claim 3, wherein monomer Y comprises n-butyl acrylate and acrylic acid.

## Patentansprüche

1. Eine synergistische mikrobizide Zusammensetzung; wobei die Zusammensetzung Folgendes beinhaltet: (a) ein Silberion, das als ein Komplex mit einem Copolymer vorliegt, wobei das Copolymer zu 35 bis 55 Gew.-% von N-Vinylimidazol abgeleitete Einheiten und zu 45 bis 65 Gew.-% von Monomer Y abgeleitete Einheiten beinhaltet; und (b) Diiodmethyl-p-tolylsulfon;

wobei ein Gewichtsverhältnis von Silber zu Diiodmethyl-p-tolylsulfon von 1 : 0,008 bis 1 : 0,1, 1 : 0,13 bis 1 : 8 oder 1 : 120 bis 1 : 280 beträgt;

wobei der Komplex zu 6,5 Gew.-% bis 8,5 Gew.-% Silber, bezogen auf das Gesamtgewicht von Copolymer und Silber, beinhaltet;

und wobei das Monomer Y eine ethylenisch ungesättigte Verbindung ist, ausgewählt aus Carbonsäuren, Carbonsäuresalzen, Carbonsäureestern, Organoschwefelsäuren, Organoschwefelsäuresalzen, Sulfonsäuren, Sulfonsäuresalzen, Phosphonsäuren, Phosphonsäuresalzen, Vinylestern, (Meth)acrylamiden, aromatischen $C_8$-$C_{20}$-Monomeren, enthaltend mindestens eine exocyclische ethylenische Ungesättigtheit und Kombinationen davon, vorausgesetzt, dass das Monomer Y mindestens ein Alkyl(meth)acrylat beinhaltet.

2. Zusammensetzung gemäß Anspruch 1, wobei das Monomer Y ausgewählt ist aus Carbonsäuren, Carbonsäureestern, (Meth)acrylamiden, aromatischen $C_8$-$C_{20}$-Monomeren, enthaltend mindestens eine exocyclische ethylenische Ungesättigtheit und Kombinationen davon, vorausgesetzt, dass das Monomer Y mindestens ein Alkyl(meth)acrylat beinhaltet.

3. Zusammensetzung gemäß einem der vorhergehenden Ansprüche, wobei das Monomer Y mindestens ein $C_2$-$C_8$-Alkyl(meth)acrylat beinhaltet.

4. Zusammensetzung gemäß Anspruch 3, wobei das Monomer Y n-Butylacrylat und Acrylsäure beinhaltet.

**Revendications**

1. Une composition microbicide synergique ; ladite composition comprenant : (a) l'ion argent qui est présent en tant que complexe avec un copolymère, ledit copolymère comprenant de 35 à 55 % en poids d'unités dérivées de N-vinylimidazole et de 45 à 65 % en poids d'unités dérivées d'un monomère Y ; et (b) du diiodométhyl-p-tolylsulfone ; dans laquelle un rapport en poids de l'argent au diiodométhyl-p-tolylsulfone va de 1/0,008 à 1/0,1, de 1/0,13 à 1/8 ou de 1/120 à 1/280 ;

dans laquelle ledit complexe comprend de 6,5 % en poids à 8,5 % en poids d'argent, rapporté au poids total de copolymère et d'argent ;

et dans laquelle le monomère Y est un composé éthyléniquement insaturé sélectionné parmi des acides carboxyliques, des sels d'acide carboxylique, des esters d'acide carboxylique, des acides organosulfuriques, des sels d'acide organosulfurique, des acides sulfoniques, des sels d'acides sulfoniques, des acides phosphoniques, des sels d'acide phosphonique, des esters vinyliques, des (méth)acrylamides, des monomères aromatiques en $C_8$-$C_{20}$ contenant au moins une insaturation éthylénique exocyclique et des combinaisons de ceux-ci, à condition que le monomère Y comprenne au moins un (méth)acrylate d'alkyle.

2. La composition de la revendication 1, dans laquelle le monomère Y est sélectionné parmi des acides carboxyliques, des esters d'acide carboxylique, des (méth)acrylamides, des monomères aromatiques en $C_8$-$C_{20}$ contenant au moins une insaturation éthylénique exocyclique et des combinaisons de ceux-ci, à condition que le monomère Y comprenne au moins un (méth)acrylate d'alkyle.

3. La composition selon n'importe lesquelles des revendications précédentes, dans laquelle le monomère Y comprend au moins un (méth)acrylate d'alkyle en $C_2$-$C_8$.

4. La composition selon la revendication 3, dans laquelle le monomère Y comprend de l'acrylate de n-butyle et de l'acide acrylique.

**EP 2 712 292 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060171911 A
- US 7335613 B